## Europäisches Patentamt
## European Patent Office
## Office européen des brevets

(19)

(11) Veröffentlichungsnummer : **0 244 726 B1**

(12) **EUROPÄISCHE PATENTSCHRIFT**

(45) Veröffentlichungstag der Patentschrift :
**05.02.92 Patentblatt 92/06**

(51) Int. Cl.$^5$ : **C04B 11/26**

(21) Anmeldenummer : **87106075.2**

(22) Anmeldetag : **25.04.87**

(54) **Verfahren zur hydrothermalen Umwandlung von Rauchgasentschwefelungsgips in Calciumsulfat-alpha-hemihydrat.**

(30) Priorität : **09.05.86 DE 3615717**

(43) Veröffentlichungstag der Anmeldung :
**11.11.87 Patentblatt 87/46**

(45) Bekanntmachung des Hinweises auf die Patenterteilung :
**05.02.92 Patentblatt 92/06**

(84) Benannte Vertragsstaaten :
**AT BE CH DE FR GB IT LI NL**

(56) Entgegenhaltungen :
**EP-A- 0 110 128**
**CH-A- 440 091**
**DE-A- 2 808 101**
**FR-A- 2 570 367**
**GB-A- 2 011 363**

(73) Patentinhaber : **Jungbunzlauer Ladenburg GmbH**
**W-6802 Ladenburg (DE)**

(72) Erfinder : **Klötzer, Erhard, Dr.**
**Schauenburgstrasse 33**
**W-6901 Dossenheim (DE)**
Erfinder : **Fiand, Ulfert, Dr.**
**Beethoven Strasse 2**
**W-6900 Heidelberg (DE)**
Erfinder : **Walther, Hans**
**Multring 19**
**W-6940 Weinheim (DE)**

(74) Vertreter : **Patentanwälte Zellentin & Partner**
**Rubensstrasse 30**
**W-6700 Ludwigshafen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Industrielle Abfallgipse fallen zumeist als sehr feinteilige, thixotrope Filterkuchen mit hohen Restfeuchten an (z.B. Phosphorsäure-, Citronensäure- oder Rauchgasentschwefelungsgips) und enthalten sowohl anhaftende (interpartikuläre) als auch eingeschlossene (intrapartikuläre) Verunreinigungen. Sowohl wegen der Materialeigenschaften als auch wegen der enthaltenen Verunreinigungen kann dieser Abfallgips daher nicht direkt industriell verwendet werden.

Es ist jedoch z.B. aus der DE-A-3239 669 bekannt, daß man Abfallgips vorzugsweise kontinuierlich in Rohrreaktoren, in Calciumsulfat- $\alpha$ -hemihydrat überführen kann, indem man eine wässrige Suspension des Industriegipses auf Temperaturen von 130 - 180 °C erhitzt. Bei der Umwandlung in das Hemihydrat werden sowohl die anhaftenden als auch die eingeschlossenen Verunreinigungen abgelöst. Es ist bekannt, daß das so gebildete Hemihydrat durch Filtration und anschließendes Nachtrocknen bei höheren Temperaturen oder Waschen mit organischen Lösungsmitteln direkt erhalten werden kann, oder daß man das Hemihydrat bei Raumtemperatur mit dem anhaftenden Restwasser zum Dihydrat reagieren lassen und in dieser Form weiterverarbeiten kann.

Es ist weiterhin bekannt, daß die Umwandlung von Gips in Calciumsulfat- $\alpha$ -hemihydrat erst bei hohen Temperaturen mit befriedigender Geschwindigkeit abläuft, daß diese Reaktion jedoch durch bestimmte Zusätze beschleunigt werden kann. So ist beispielsweise aus der DE-C-28 08 101 und der DE-PS 14 71 024 bekannt, der Gipssuspension eine organische oder anorganische Säure zuzusetzen, um dadurch die Reaktionsgeschwindigkeit zu erhöhen bzw. die Reaktionstemperatur herabzusetzen. Aus der DE-C-28 54 722 ist ferner bekannt, daß die Umsetzungsgeschwindigkeit auch durch Zusatz pulverförmiger anorganischer Substanzen erhöht werden kann, wobei insbesondere ein Zusatz von Calciumsulfatanhydrit oder Calciumsulfathemihydrat (alpha oder beta) brauchbar zu sein scheint.

Während die vorstehenden Methoden mit dem relativ feinteiligen Gips aus der Citronensäureproduktion gut durchgeführt werden können, und auch mit dem relativ groben Material aus der Rauchgasentschwefelung (REA-Gips) in verdünnten Lösungen, d.h. in Konzentrationen von etwa 5 - 20 % Gips, relativ störungsfrei ablaufen, hat sich herausgestellt, daß REA-Gips in Konzentrationen von über 20 % auf diese Weise nicht mehr umgesetzt werden kann. Die Umlagerung von Calciumsulfatdihydrat in Calciumsulfat- $\alpha$ -hemihydrat tritt nämlich bei dieser Art von Gips relativ schlagartig ein, nachdem die Suspension die "Starttemperatur" überschritten hat, was zu einem plötzlichen Ausfall sehr großer Mengen sehr feinteiligen $\alpha$-Hemihydrats führt, welches dann anschließend die Apparaturen verstopft und die weitere Produktion zum Erliegen bringt. Wie festgestellt wurde, ist dieses Verhalten gleichermaßen zu beobachten, wenn man die hydrothermale Umsetzung ohne Katalysator oder mit einem der verschiedenen Katalysatoren durchführt. Unterschiedlich ist dabei lediglich die "Starttemperatur", die je nach eingesetzter Gips-Qualität bei einer Umsetzung ohne Katalysator bei einer Temperatur von etwa 165 - 180 °C, bei der Umsetzung mit organischen Säuren bei einer Temperatur von 155 - 170 °C und bei Umsetzung mit Schwefelsäure als Katalysator ungefähr bei einer Temperatur von 140 - 145 °C liegt. Es wird angenommen, daß dieser signifikante Unterschied zwischen REA-Gips und anderen Abfallgipsen, beispielsweise Citronensäuregips, darauf beruht, daß der Rauchgasgips überwiegend aus relativ großen (50 - 100 µm), gut ausgebildeten, prismatischen Kristallen besteht, die sich bei gegebenen Aufheizbedingungen aufgrund ihrer Gleichförmigkeit praktisch gleichzeitig, d.h. während eines kurzen Intervalls, in das Hemihydrat umlagern, während beispielsweise Citronensäuregips überwiegend aus nadelförmigen und plättchenförmigen Kristallen unterschiedlichster Korngröße (5 - 100 µm) besteht, so daß bei den selben Aufheizbedingungen ein Teil sich umlagert, während der Rest erst wesentlich später umgelagert wird, wodurch die gesamte Umlagerung gleichförmiger ist und bereits vorhandene Kristallkeime von $\alpha$-Hemihydrat zu größeren Kristallen anwachsen können und dadurch eine weniger verfilzte und somit besser bearbeitbare Masse ergeben.

Aufgabe der vorliegenden Erfindung war es daher, ein Verfahren zur hydrothermalen Umsetzung von REA-Gips zu finden, welches auch bei höheren Gipskonzentrationen ohne Verstopfung der Apparatur in kurzer Zeit und bei möglichst niedriger Temperatur abläuft.

Überraschenderweise wurde gefunden, daß diese Aufgabe dadurch gelöst werden kann, daß man die hydrothermale Umsetzung einer Suspension mit etwa 20 - 55, vorzugsweise 40 - 50 Gew.% REA-Gips in Wasser bei Temperaturen zwischen 140 und 170 °C, vorzugsweise 155 - 165 °C und einer Reaktionszeit von 3 - 20 Min. durchführt und als Katalysator eine Mischung aus 0,02 - 1.0, vorzugsweise 0,1 - 0,5 Gew.% Schwefelsäure und 0,02 - 1,0, vorzugsweise 0,1 - 0,6 Gew.% organische Säure verwendet.

Wie festgestellt wurde, setzt die Reaktion unter diesen Bedingungen bereits bei Temperaturen ein, die einer optimalen Katalyse mit Schwefelsäure entsprechen, verläuft jedoch durch die anwesenden organischen Säuren nicht so schlagartig, sondern verlangsamt, so daß sich größere, nicht verfilzte Kristalle des $\alpha$-Hemihydrats ausbilden können. Dieser Befund erscheint außerordentlich überraschend, nachdem aus der Literatur bekannt war, daß auch die organischen Säuren als Katalysatoren brauchbar sind, d.h. der Fachmann eigentlich

2

einen zumindest additiven Effekt, d.h. eine Beschleunigung der Reaktion hätte erwarten sollen und nicht eine Verlangsamung.

Zur Durchfürung des erfindungsgemäßen Verfahrens werden Gips, Schwefelsäure und organische Säure, vorzugsweise Citronensäure, in den angegebenen Mengenverhältnissen zu einem gleichförmigen Brei angerührt, welcher aufgrund der Konzentration der Gipskristalle gerade noch gut pumpfähig ist und in dieser Form mit Heißdampf rasch auf die Reaktionstemperatur von 140 - 170 °C aufgeheizt werden kann. Vorzugsweise findet die Umsetzung in einem Rohrreaktor, beispielsweise gemäß DE- OS 32 39 669 statt. Für die Umsetzung wird im allgemeinen eine Reaktionszeit von 3 - 20 min benötigt, wobei naturgemäß die Umsetzung um so schneller erfolgt, je höher die Temperatur der Mischung ist. Soweit es lediglich darauf ankommt, eine Teilumsetzung zu erreichen, kann auch bei relativ niedrigen Temperaturen und kurzen Reaktionszeiten nur ein Teil des Gipses in das Hemihydrat umgewandelt werden und der Rest unverändert in der Suspension zurückbleiben.

Von den organischen Säuren wird Citronensäure bevorzugt, da sie einerseits als komplexbildende Säure einen besonders günstigen Einfluß zu haben scheint und andererseits aus dem Reaktionsprodukt mit Wasser besonders gut ausgewaschen werden kann. Als weitere Säuren seien beispielhaft Ameisensäure, Essigsäure, Apfelsäure, Weinsäure, Bernsteinsäure, Milchsäure und Maleinsäure genannt.

Die als Katalysator eingesetzten Säuren lassen sich normalerweise bei der Filtration, insbesondere durch nachträgliches Waschen mit Wasser, so weitgehend entfernen, daß sie auf den erhaltenen Gips bzw. das erhaltene $\alpha$-Hemihydrat und seine Eigenschaften keinen Einfluß mehr besitzen. Aus wirtschaftlichen Grüden wird man die Filtrate und Waschwässer, die praktisch die gesamte Säure enthalten, wieder in das Verfahren zurückfüren und zur Suspension weiteren Rauchgasgipses verwenden.

Als Verunreinigungen in REA-Gips kommen zum Beispiel Calciumhydroxid, Calciumcarbonat, -sulfit, -chlorid, -fluorid und verschiedene Schwermetalle vor. Zur Überführung der Calciumsalze in Gips ist insbesondere eine laufende Ergänzung durch Schwefelsäurezusatz erforderlich. Die sich in der Mutterlauge anreichernden Verunreinigungen müssen entweder entfernt oder durch einen entsprechenden Zusatz von Frischwasser soweit verdünnt werden, daß sie sich nicht in dem gebildeten Hemihydrat niederschlagen und damit dessen Weiterverarbeitbarkeit beeinträchtigen.

Die folgenden Beispiele dienen zur Erläuterung der Erfindung, sollen diese jedoch nicht begrenzen.

Soweit nichts anderes angegeben ist, beziehen sich alle Angaben von Gewichtsprozent (Gew.%) auf die wässrigen Suspensionen.

Bezugszeichenliste

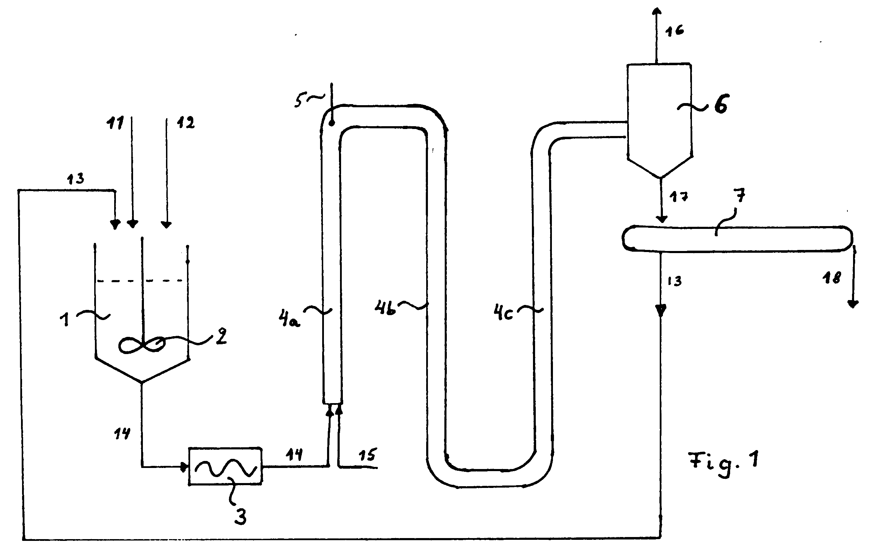

In der beigefügten Figur 1 ist eine schematische Darstellung eines Rohrreaktors gemäß DE-A 32 39 669 abgebildet. In dieser bedeutet
1) Mischgefäß für Gips und Wasser
2) Rührvorrichtung
3) Druckpumpe
4) Reaktorrohr mit den Zweigen 4a-4c
5) Temperaturmeßstelle
6) Entspannungsgefäß
7) Filtervorrichtung
11) Gipszufürung
12) Wasserzuführung
13) Waschwasserleitung
14) Maischeleitung
15) Heißdampfleitung
16) Dampfentspannungsleitung
17) Hemihydratableitung
18) Produktableitung

Beispiel 1

Umsetzung von REA-Gips in Abhängigkeit von Temperatur und Katalysator:
In einem 500 ml-Autoklaven wurde eine 40 %-ige Suspension von REA-Gips in Wasser eingefüllt, mit der angegebenen Katalysatormenge versetzt und in verschlossenem Zustand rasch auf 100 °C erhitzt. Danach wurde mit einer Aufheizungsgeschwindigkeit von ca. 5 °C/min auf 145 bzw. 165 °C weiter erhitzt. Nach Beendigung der Reaktion wurde das Produkt bei 95 °C filtriert, mit wasserfreiem Methanol gewaschen und der Gehalt an Hemihydrat bestimmt. Falls der Reaktorinhalt soweit verfestigt war, daß er nicht mehr gießfähig war, wurde eine entsprechende Probe herausgekratzt, ebenfalls mit Methanol gewaschen und bestimmt. Die Ergebnisse sind in der Tabelle 1 zusammengefaßt. Die Reaktonszeiten wurden ab Erreichen der Endtemperatur berechnet.

Beispiel 2

Hydrothermale Umwandlung von Gips im Rohrreaktor :

Ein dreizügiger Rohrreaktor gemäß DE-P 32 39 669 mit einer Rohrlänge von 42 m und einem Rohrdurchmesser von 8,5 cm wurde mit einer 45 %-igen REA-Gips-Suspension in Wasser, die auf 95 °C vorerwärmt ist, beschickt. Der Volumenstrom wurde auf 1,5 m³/h eingestellt, was einer linearen Strömungsgeschwindikeit von ca. 5 m/min bzw. einer Verweilzeit von ca. 9 min entspricht. Die Aufheizung des Reaktors wurde durch Einblasen von 180 °C heißem Dampf im Gleichstrom mit der Gipssuspension erreicht. Die Reaktortemperatur wurde jeweils am Kopf des ersten Rohrabschnittes (vgl. Figur 1) gemessen. Zur Bestimmung des Umsetzungsgrades wurde nach einer halben Stunde Durchlauf ein aliquoter Teil des Produktes vom Bandfilter entnommen, mit Methanol gewaschen und der Gehalt von Hemihydrat bestimmt. Die Ergebnisse sind in der Tabelle 2 zusammengefaßt.

## TABELLE I

Umsetzung von REA-Gips in Abhängigkeit von Temperatur und Katalysator:

| Vers. Nr. | Katalysator % H$_2$SO$_4$ | % Ci.S. | Reaktionstemper. °C | Reaktionszeit (min) | Ergebnis (Hemihydrat %) | Bemerkungen |
|---|---|---|---|---|---|---|
| 1 | -- | -- | 145 | 10 | 0 | keine Reaktion |
| 2 | -- | -- | 165 | 10 | 0 | '' '' |
| 3 | -- | -- | 165 | 60 | 62 | Reaktorinh. fest |
| 4 | 0,1 | -- | 145 | 10 | 0 | keine Reaktion |
| 5 | 0,1 | -- | 165 | 10 | 80 | Reaktorinh. fest |
| 6 | 0,1 | -- | 145 | 60 | 65 | '' '' |
| 7 | -- | 0,1 | 145 | 10 | 0 | keine Reaktion |
| 8 | -- | 0,1 | 165 | 10 | 18 | Reaktorinh. gießbar |
| 9 | -- | 0,1 | 145 | 60 | 56 | '' '' |
| 10 | 0,1 | 0,1 | 145 | 10 | 42 | '' '' |
| 11 | 0,1 | 0,1 | 165 | 10 | 95 | '' '' |
| 12 | 0,1 | 0,1 | 145 | 60 | 90 | '' '' |
| 13 | 0,05 | 0,05 | 165 | 60 | 98 | '' '' |

EP 0 244 726 B1

## TABELLE II

### Hydrothermale Umwandlung von Gips im Rohrreaktor:

| Vers. Nr. | Katalysator | | Reaktionstemper. C | Ergebnis %Hemihydrat | Bemerkungen |
|---|---|---|---|---|---|
| | % $H_2SO_4$ | % Ci.S. | | | |
| 1 | -- | -- | 145 | 0 | keine Reaktion |
| 2 | -- | -- | 165 | 0 | " " |
| 3 | 0,1 | -- | 140 | 0 | " " |
| 4 | 0,3 | -- | 145 | 64 | Reaktor nach 67 min. blockiert |
| 5 | 0.1 | -- | 165 | 80 | Reaktor nach 45 min. blockiert |
| 6 | -- | 0,1 | 145 | 0 | keine Reaktion |
| 7 | -- | 0,1 | 165 | 25 | geringe Reaktion |
| 8 | 0,1 | 0,1 | 155 | 30 | gleichmäßige Reaktion |
| 9 | 0,1 | 0,1 | 165 | 94 | sehr gute Reaktion |
| 10 | 0,3 | 0,2 | 145 | 86 | " " " |
| 11 | 0,1 | 0,3 | 165 | 98 | " " " |
| 12 | 1,0 | 1,0 | 165 | 94 | Reaktor nach 10 min. blockiert |

EP 0 244 726 B1

**Patentansprüche**

1. Verfahren zur hydrothermalen Umwandlung von Industrieabfallgips in Calciumsulfat- $\alpha$ -Hemihydrat durch Erhitzen einer wässrigen Suspension von Gips unter Druck auf Temperaturen von 130 - 180° C unter Zusatz von Säuren, dadurch gekennzeichnet, daß man Rauchgasentschwefelungsgips (REA-Gips) in einer Konzentration von 20 - 55, vorzugsweise 40 - 50 Gew.% mit 0,02 - 1,0 Gew.%, vorzugsweise 0,1 - 0,5 Gew.% Schwefelsäure und 0,02 - 1,0, vorzugswelse 0,1 - 0,6 Gew.% einer organischen Säure bei Temperaturen von 145 °C bis 170 °C, vorzugswelse 155 - 165 °C, in Zeiten von 3 - 20 Min. umsetzt.

2. Verfahren gemäß Anspruch 1, dadurch gekennzeichnet, daß als organische Säure Citronensäure eingesetzt wird.

3. Verfahren gemäß Anspruch 1 oder 2, dadurch gekennzeichnet, daß die Umsetzung kontinulerlich in einem Rohrreaktor durchgeführt wird.

4. Verfahren gemäß Anspruch 1 - 3, dadurch gekennzeichnet, daß das Hemihydrat anschließend abfiltriert, gewaschen und getrocknet oder mit der anhaftenden Restfeuchte in Calciumsulfatdihydrat überführt wird.

5. Verfahren gemäß Anspruch 4, dadurch gekennzeichnet, daß das Filtrat und Waschwasser zur Anmaischung von weiterem REA-Gips verwendet wird.


**Revendications**

1. Procédé de transformation hydrothermique de résidus de gypse de l'industrie en hémihydrate $\alpha$ de sulfate de calcium par chauffage d'une suspension aqueuse de gypse sous pression à des températures de 130 à 180°C, avec addition d'acides, caractérisé en ce qu'on fait réagir du gypse provenant de la désulfuration de gaz de fumée (gypse REA) en une concentration de 20 à 55 % en poids, de préférence de 40 à 50 % en poids, avec 0,02 à 1,0 % en poids, de préférence 0,1 à 0,5 % en poids, d'acide sulfurique et 0,02 à 1,0 % en poids, de préférence 0,1 à 0,6 % en poids, d'un acide organique, à des températures de 145°C jusqu'à 170°C, de préférence de 155 à 165°C, pendant des durées de 3 à 20 minutes.

2. Procédé suivant la revendication 1, caractérisé en ce que, comme acide organique, on met en oeuvre de l'acide citrique.

3. Procédé suivant l'une des revendications 1 et 2, caractérisé en ce que la réaction est effectuée en continu dans un réacteur tubulaire.

4. Procédé suivant l'une des revendications 1 à 3, caractérisé en ce que l'hémihydrate est ensuite séparé par filtration, lavé et séché, ou est converti en dihydrate de sulfate de calcium avec l'humidité résiduaire adhérente.

5. Procédé suivant la revendication 4, caractérisé en ce que le filtrat et l'eau de lavage sont utilisés pour le mouillage de gypse REA ultérieur.


**Claims**

1. Process for the hydrothermal conversion of industrial waste gypsum into calcium sulphate $\alpha$-hemihydrate by heating of an aqueous suspension of gypsum under pressure to temperatures of 130 - 180°C. with addition of acids, characterised in that one reacts flue gas desulphurisation gypsum (REA gypsum) in a concentration of 20 - 55, preferably of 40 - 50 wt.%, with 0.02 - 1.0 wt.%, preferably 0.1 - 0.5 wt.%, of sulphuric acid and 0.02 - 1.0, preferably 0.1 - 0.6 wt.%, of an organic acid at temperatures of 145°C. to 170°C., preferably of 155 - $\mu$165°C., in times of 3 - 20 min.

2. Process according to claim 1, characterised in citric acid is used as organic acid.

3. Process according to claim 1 or 2, characterised in that the reaction is carried out continuously in a tube reactor.

4. Process according to claims 1 - 3, characterised in that the hemihydrate is subsequently filtered off, washed and dried or converted with the adhering residual moisture into calcium sulphate dihydrate.

5. Process according to claim 4, characterised in that the filtrate and wash water is used for the slurrying of further REA gypsum.

Fig. 1